# EUROPÄISCHE PATENTSCHRIFT

(11) **EP 0 413 905 B1**
(45) Veröffentlichungstag und Bekanntmachung des Hinweises auf die Patenterteilung: **13.07.1994**
(21) Anmeldenummer: 90110016.4
(22) Anmeldetag: 26.05.1990
(51) Int. Cl.: E01H 1/08, A01D 43/06

(54) **Mäh- und Kehrvorrichtung**
Moving and sweeping device
Dispositif pour faucher et balayer

(30) Priorität: 24.08.1989 DE 3927907
(43) Veröffentlichungstag der Anmeldung: 27.02.1991
(73) Patentinhaber: Maschinen-Mohr Inh.: Hermann Mohr, D-91792 Ellingen (DE)
(72) Erfinder: Mohr, Hermann, D-8836 Ellingen (DE)
(74) Vertreter: Matschkur, Götz, Lindner Patent- und Rechtsanwälte

(56) Entgegenhaltungen:
- WO-A-87/01404
- DE-A- 1 803 165
- DE-A- 2 755 923
- DE-A- 3 124 722
- GB-A- 1 586 325

## Beschreibung

Die Erfindung bezieht sich auf eine Mäh- und Kehrvorrichtung mit einem auf einem Fahrzeug angeordneten, nach rückwärts über eine aufschwenkbare Türklappe geschlossen Behälter, in den über einen das Mäh- bzw. Kehrwerk übergreifenden Ansaugkasten, über eine flexible Rohrleitung und mittels eines Gebläses das abgemähte Gras, Laub, Staub od. dgl. eingeblasen wird.

Derartige Mäh- und Kehrvorrichtungen, bei denen das Mäh- und Kehrgut sofort in einen mitgeführten Behälter eingeblasen und periodisch dieser Behälter an einer Deponie wieder entleert wird, sind bereits in den unterschiedlichsten Ausführungsformen bekannt geworden. Neben Nachläuferanordnungen, bei denen der Behälter als Nachläuferanhänger an das Mäh- bzw. Kehrwerk tragende Zugfahrzeug angehängt ist, sind auch bereits Vorrichtungen vorgeschlagen worden, bei denen der Behälter auf das Fahrzeug aufgesattelt ist und jeweils durch Ankippen entleert werden kann.

Bei allen diesen Anordnungen (GB-A-1586325, WO-A-8701404, DE-A-1803165, DE-A-3124722) ist grundsätzlich vorgesehen, daß das Gebläse außerhalb des Sammel-Behälters angeordnet ist, wobei neben einer Anordnung vor der vorderen Stirnwand des Behälters sich eine Anordnung besonders bewährt hat, bei der das Gebläse unter einem geneigten Teil des Behälterbodens auf den Fahrzeugrahmen so angeordnet ist, daß bei abgesenktem Behälter die Einblasöffnung des geneigten Behälterboden an der Ausblasöffnung des Gebläses anliegt. Diese bekannten Anordnungen haben jedoch bei aller Bewährtheit eine Reihe von Nachteilen. Die Anordnung des Gebläses vor dem Behälter bedeutet in Längsrichtung einen erheblichen Platzbedarf, so daß kurzbauende Fahrzeuge auf diese Weise überhaupt nicht möglich sind. Die Anordnung des Gebläses unter dem geneigten Behälterboden bedeutet wegen der notwendigen seitlichen Schürzen der Seitenwände des Behälters zur Bildung eines einigermaßen geschlossenen Raums für das Gebläse nicht nur einen erhöhten Bauaufwand. Darüber hinaus ist bei diesen Anordnungen, bei denen das Sammelgut ja einfach nach hinten herausrutschen kann und demzufolge ein Ankippen nicht vorgesehen ist, die Wartung der Turbine sehr kompliziert, da erst ein Freilegen durch Abbau der Verkleidung stattfinden muß. Infolge der rauhen Betriebsbedingungen (Steine od. dgl.) muß man aber relativ häufig damit rechnen, daß die Gebläseflügel beschädigt werden oder ein Verstopfen stattfindet, so daß dann jedesmal mühsam erst das Gebläse freigelegt werden muß. Geht man von einer Anordnung aus, bei der durch Wegkippen des Behälters das fest auf dem Chassis des Fahrzeugs angeordnete Gebläse relativ rasch freigelegt wird, so ergibt sich dabei wiederum die Schwierigkeit, daß eine wirksame Abdichtung nicht gegeben ist, so daß das Sammelgut, welches durch Undichtigkeiten immer auch seitlich aus dem Ausblasstutzen des Gebläses herausgedrückt wird. Das gesamte Fahrzeug und insbesondere die zwischen Fahrerkabine und aufgesatteltem Behälter angeordneten Funktionsteile werden verschmutzt und möglicherweise gar in der Funktion beeinträchtigt.

Der Erfindung liegt daher die Aufgabe zugrunde, eine Mäh- und Kehrvorrichtung der eingangs genannten Art so auszugestalten, daß dabei unabhängig von der Art der Entleerung des Behälters und bei einfachstem Aufbau eine gute Zugänglichkeit der Turbine für Wartungsarbeiten ebenso gegeben ist wie eine optimale Raumausnutzung des zur Verfügung stehenden Behälters für die Aufnahme des Mäh- und Kehrgutes.

Zur Lösung dieser Aufgabe ist erfindungsgemäß vorgesehen, daß das Mäh- bzw, Kehrgut durch das Gebläse hindurchgefördert wird, wobei das mit einem Öl-Hydraulik-Antrieb versehene Gebläse innen in den Behälter hineingestellt und über elastische, vorzugsweise Gummi-Puffer leicht lösbar auf dem Boden des Behälters derart befestigt ist, daß sein Ansaugstutzen über elastische Dichtringe federnd an die die Einblasöffnung enthaltende Seitenwand des Behälters angedrückt ist, wobei der an das Gebläse angeflanschte Antrieb durch abgedichtet aus dem Behälter geführte Hydraulikschläuche mit einer äußeren Ölpumpe verbunden ist.

Entgegen der allgemeinen bisher grundsätzlich vorherrschenden Auffassung hat es sich nämlich gezeigt, daß es gar nicht erforderlich ist, das Gebläse außerhalb des Behälters anzuordnen, sondern daß man dies einfach frei in den Behälter hineinstellen kann, wenn man dabei nur berücksichtigt, daß es federnd auf dem Boden, also bevorzugt über Gummipuffer befestigt ist. Durch Vorsehen von Langlochschlitzen im Boden, die von den Befestigungsbolzen durchsetzt werden, kann dabei das Gebläse mit seinen Ansaugstutzen und aufgesetzte Dichtringe direkt in ausreichender Weise an die eine Innenwand mit der Einblassaugöffnung angedrückt sein, so daß trotz der unvermeidlichen Rüttelbewegungen des Gebläses ein abdichtender Kontakt zur Innenwand ebenso bestehen bleibt, wie durch diese Rüttelbewegungen auch Beschädigungen des Behälteraufbaus nicht vorkommen können. Durch Vorsehen eines Öl-Hydraulik-Antriebs, der direkt an das Gebläse mit einem Schneckengehäuse und einem üblichen Flügelrad angeflanscht ist, bedarf es auch keiner externen Anordnung zur Sicherung des Antriebs gegen das Mäh- oder Kehrgut mehr, da ein solcher Hydraulik-Antrieb kleinräumig und völlig gekapselt ohne weiteres im Mäh- und Kehrgut eingebettet liegen kann. Daß auch das Gebläsegehäuse außen im Mäh- und Kehrgut liegt, spielt ja überhaupt keine Rolle, da es funktionsmäßig völlig ohne Bedeutung ist. Auf der anderen Seite läßt sich aber ein so erfindungsgemäß angeordnetes Gebläse extrem einfach durch Lösen weniger Schrauben demontieren und zur Wartung herausnehmen, während auf der anderen Seite der Behälter nach außen völlig abgedichtet ist, so daß die bisher so häufig störende Verschmutzung von Versorgungsaggregaten des Fahrzeugs zwischen Führerhaus und Behälter mit Sicherheit vermieden wird.

Durch die erfindungsgemäße Ausbildung, bei der das Gebläse bevorzugt in eine der vorderen Ecken des mit einem durchgehend horizontalen Boden versehen Behälters angeordnet wird, kann der Behälter ausgehend von einer bestimmten Pritschengröße des Fahrzeugs erheblich größer sein als bei den bisherigen Konstruktionen, bei denen entweder ein erheblicher Abstrich in der Länge gemacht werden mußte, da das Gebläse vor der vorderen Stirnwand des Behälters angeordnet werden mußte oder aber durch eine schräg geneigte Bodenwand, unter der das Gebläse saß, der verfügbare Innenraum des Behälters doch nicht unerheblich eingeschränkt wurde.

Man erreicht, wie umfangreiche, der vorliegenden Erfindung vorausgegangene Versuche belegt haben, eine vollständige Ausfüllung des gesamten Behältervolumens wenn man lediglich über der oben liegenden Ausblasöffnung des Gebläses ein gebogenes Umlenkblech anordnet, das gegebenenfalls noch eine seitliche Schürze zur Einblasseitenwand hin aufweist.

Schließlich liegt es auch noch im Rahmen der Erfindung, daß die hinter der Seitenwand in der Einblasöffnung liegende Stirnplatte des Ansaugstutzens des Gebläses mit Schnellanschlußgliedern zum Anflanschen des Verbindungsstutzens der flexiblen Rohrleitung versehen ist. Auf der einen Seite ist dabei eine glatte Außenwand des Behälters gegeben und man kann sehr rasch beliebige Saugschläuche anordnen, beispielsweise auch einen einfachen Saugschlauch zum Einsaugen von Laubhaufen ohne Verwendung des eigentlichen Mäh- oder Kehrwerks.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine perspektivische Ansicht einer erfindungsgemäßen Mäh- und Kehrvorrichtung mit auf das Fahrzeug aufgesattelten, vorzugsweise kippbaren Sammel-Behälter,
- Fig. 2: eine schematische perspektivische Innenansicht der Ecke des Behälters mit dem darin hineingestellten Gebläse,
- Fig. 3: einen vergrößerten Schnitt längs der Linie III-III in Fig. 1 zur Darstellung des abdichtenden Andrückens des Ansaugstutzens des Gebläses an die Seitenwand des Behälters und
- Fig. 4: eine vergrößerten Schnitt längs der Linie IV-IV in Fig. 2.

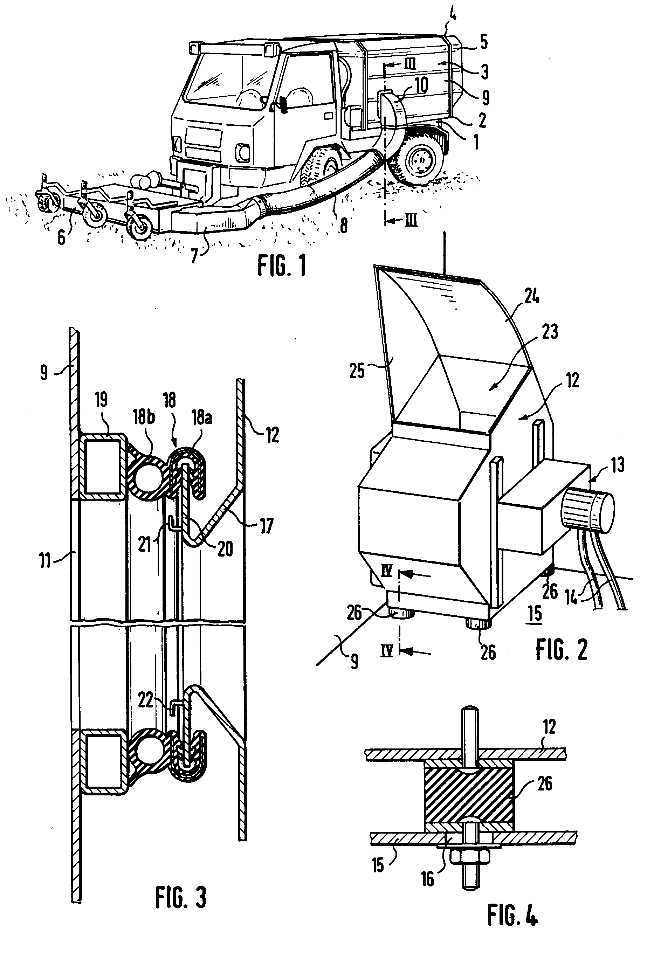

Die in Fig. 1 gezeigte Mäh- und Kehrvorrichtung besteht aus einem Fahrzeug mit einem auf die Ladepritsche 1 aufgesattelten mittels einer nicht gezeigten um die hintere untere Achse 2 angekippbaren Sammelbehälter 3, der mit einer um eine obere Schwenkachse 4 aufschwenkbare Türklappe 5 verschlossen ist. Beim Ankippen des Behälters um die Achse 2 wird die Türklappe geöffnet, so daß das Sammelgut (Gras, Laub, Staub od. dgl.) aus dem Behälter herausrutschen kann. Am vorderen Ende ist das Fahrzeug mit einer Halterungsvorrichtung für ein Mäh- oder Kehrwerk 6 versehen, das einen seitlichen Absaugstutzen 7 aufweist, der über eine flexible Rohrleitung 8 mit einem weiteren an die Seitenwand 9 des Behälters 2 angeflanschten Einblasstutzen 10 verbunden ist. Der Einblasstutzen 10 umgibt die Einblasöffnung 11 der Seitenwand 9.

Das Gebläse 12 mit einem üblichen in einem Schneckengehäuse angeordneten Flügelrad ist erfindungsgemäß mit einem angeflanschten Öl-Hydraulik-Antrieb 13 versehen, der durch abgedichtet den Behälter durchsetzende Hydraulikschläuche 14 mit einer äußeren, vorzugsweise auf eine Zapfwelle des Fahrzeugs aufgesetzten Ölpumpe verbunden ist. Das Gebläse 12 ist über Gummi-Puffer 26 einfach in den Behälter auf dessen Boden 15 aufgestellt (wie man in Fig. 2 erkennt in der vorderen linken Ecke des Behälters), wobei durch Vorsehen von Langlochschlitzen 16 im Boden das Gehäuse so gegen die Seitenwand 9 verschoben werden kann, daß sich sein Ansaugstutzen 17 über elastische Dichtringe 18 federnd an die Innenwand - im gezeigten Ausführungsbeispiel einen umlaufenden Versteifungsrahmen 19 an der Innenwand - anlegt. Neben der Abdichtungs des Ansaugstutzens zur Seitenwand 9 wird damit auch die notwendige Beweglichkeit des Gebläsegehäuses garantiert, die aufgrund der unvermeidlichen Rüttelbewegungen zustande kommt.

Die vordere Stirnplatte 20 des Ansaugstutzens 17 ist mit - schematisch als Haken 21, 22 angedeuteten Schnellanschlußgliedern versehen, die zum einfachen Anflanschen des Verbindungsstutzens 10 vorgesehen sind. Bei dem umlaufenden Dichtring 18 handelt es sich um ein handelsübliches Profil mit einem U-Teil 18a, welches auf einen Außenflansch der Stirnwand 20 aufklemmbar ist und einem angeformten Schlauchring 18b. Die oben liegende Ausblasöffnung 23 des Gebläses 12 wird von einem gebogenen Umlenkblech 24 überwölbt, welches durch eine seitliche Schürze 25, die im wesentlichen an der Innenseite der Seitenwand 9 anliegt bzw. diese eng benachbart ist, versteift wird. Durch die erfindungsgemäße Anordnung kann der gesamte Innenraum des mit einem Boden ausgestatteten Behälters 2 mit Sammelgut gefüllt werden, wobei das Gebläse mit Ausnahme eines Bereichs über seiner Ausblasöffnung in das Sammelgut eingebettet ist, was aber wegen des völlig gekapselten Öl-Hydraulik-Antriebs überhaupt keine Schwierigkeiten bereitet. Durch das Vorsehen lediglich von Hydraulikschläuchen, die zur äußeren Ölpumpe führen, kann der Behälter auch sehr einfach ankippbar ausgestaltet sein, was ja bei einem mechanischen Antrieb erhebliche Schwierigkeiten bereiten würde. Durch Lösen von lediglich vier Schrauben kann das Gebläse im Behälter gelöst und herausgenommen werden um etwaige Beschädigungen der Lüfterflügel durch Steine od. dgl. oder andere Störungen problemlos beseitigen und anschließend in ebenso problemloser Weise die Montage des Gebläses wieder durchführen zu können.

## Patentansprüche

1. Mäh- und Kehrvorrichtung mit einem auf einem Fahrzeug angeordneten, nach rückwärts über eine aufschwenkbare Türklappe (5) geschlossenen Behälter (3), in den über einen das Mäh- bzw. Kehrwerk (6) übergreifenden Ansaugkasten, über eine flexible Rohrleitung (8) und mittels eines Gebläses (12) das abgemähte Gras, Laub, Staub od. dgl. eingeblasen wird, dadurch gekennzeichnet, daß das Mäh- bzw, Kehrgut durch das Gebläse (12) hindurchgefördert wird, wobei das mit einem Öl-Hydraulik-Antrieb (13) versehene Gebläse (12) innen in den Behälter hineingestellt und über elastische, vorzugsweise Gummi-Puffer (26) leicht lösbar auf den Boden (15) des Behälters (3) derart befestigt ist, daß sein Ansaugstutzen (17) über einen elastischen Dichtring (18) federnd an die die Einblasöffnung (11) enthaltende Seitenwand (9) des Behälters angedrückt ist, wobei der an das Gebläse (12) angeflanschte Antrieb (13) durch abgedichtet aus dem Behälter (3) geführte Hydraulikschläuche (14) mit einer äußeren Ölpumpe verbunden ist.

2. Mäh- und Kehrvorrichtung nach Anspruch 1, dadurch gekennzeichnet, daß das Gebläse (12) in einer der vorderen Ecken des mit einem durchgehend horizontalen Boden (15) versehenen Behälters (3) angeordnet ist.

3. Mäh- und Kehrvorrichtung nach Anspruch 1 oder 2, dadurch gekennzeichnet, daß über der oben liegenden Ausblasöffnung (23) des Gebläses ein gebogenes Umlenkblech (24) angeordnet ist.

4. Mäh- und Kehrvorrichtung nach einem der Ansprüche 1 bis 3, dadurch gekennzeichnet, daß die hinter der Seitenwand (9) in der Einblasöffnung (11) liegende Stirnplatte (20) des Ansaugstutzens (17) des Gebläses (12) mit Schnellanschlußgliedern (21, 22) zum Anflanschen des Verbindungsstutzens (10) der flexiblen Rohrleitung (8) versehen ist.

## Claims

1. Mowing and sweeping apparatus having container (3) closed at the rear via a pivotable gate (5), into which container the cut grass, foliage, dust or the like is blown by means of a blower (12) through a flexible conduit (8) and via a suction box overlapping the mowing or sweeping apparatus (6), characterised in that the cuttings or refuse is conveyed through the blower (12), and the blower provided with an oil-hydraulic drive (13) is inserted inside the container and is attached in an easily detachable manner to the floor (15) of the container (3)via resilient, preferably rubber buffers (26), in such a manner that its suction nozzle (17) is pressed resiliently via a resilient sealing ring (18) against the side wall (9) of the container comprising the inlet aperture (11), and the drive (13) joined on to the blower (12) is connected to an external oil pump by hydraulic hoses (14) passing out of the container (3) in a sealed manner.

2. Mowing and sweeping apparatus according to claim 1, characterised in that the blower (12) is disposed in one of the front corners of the container (3), which is provided with a continuous horizontal floor (15).

3. Mowing and sweeping apparatus according to claim 1 or 2, characterised in that a curved baffle plate (24) is disposed above the outlet aperture (23) at the top of the blower.

4. Mowing and sweeping apparatus according to one of claims 1 to 3, characterised in that the end plate (20) of the suction nozzle (17) of the blower (12) lying in the inlet aperture (11) behind the side wall (9) is provided with rapid connection members (21, 22) for joining on the connecting nozzle (10) of the flexible conduit (8).

## Revendications

1. Dispositif de fauchage et de balayage, comprenant un conteneur (3) qui est disposé sur un véhicule, et est fermé vers l'arrière par un volet de porte (5) pouvant s'ouvrir par basculement, et dans lequel sont insufflés, au moyen d'un ventilateur (12) l'herbe coupée, les feuilles, les poussières ou analogues, par l'intermédiaire d'un caisson d'aspiration surmontant le mécanisme de fauchage ou bien de balayage (6), et d'une conduite tubulaire (8) flexible, caractérisé en ce que le produit de fauchage ou bien de balayage est refoulé à travers le ventilateur (12), le ventilateur (12) pourvu d'un mécanisme d'entraînement hydraulique (13) à huile, étant disposé à l'intérieur du conteneur et fixé, de manière aisément amovible, sur le fond (15) du conteneur (3), par l'intermédiaire de tampons élastiques (26), de préférence en caoutchouc, de manière telle, que la tubulure d'aspiration (17) soit appliquée de manière élastique, par l'intermédiaire d'un anneau d'étanchéité (18) élastique, sur la paroi latérale (9) du conteneur renfermant l'ouverture d'insufflation (11), le mécanisme d'entraînement (13) bridé sur le ventilateur (12) étant relié à Une pompe à huile extérieure, par l'intermédiaire de tuyaux souples hydrauliques (14) sortant hors du conteneur (3), de manière étanche.

2. Dispositif de fauchage et de balayage selon la revendication 1, caractérisé en ce que le ventilateur (12) est disposé dans l'un des coins avant du conteneur (3) pourvu d'un fond (15) entièrement horizontal.

3. Dispositif de fauchage et de balayage selon la revendication 1 ou la revendication 2, caractérisé en ce qu'au-dessus de l'ouverture de refoulement (23) du ventilateur, située dans le haut, est disposée une tôle déflectrice (24) arquée.

4. Dispositif de fauchage et de balayage selon l'une des revendications 1 à 3, caractérisé en ce que la plaque frontale (20) de la tubulure d'aspiration (17) du ventilateur (12), située derrière la paroi latérale (9), dans l'ouverture d'insufflation (11), est pourvue d'organes de raccordement rapide (21, 22) destinés au bridage de la tubulure de liaison (10) de la conduite tubulaire (8) flexible.
